# EUROPEAN PATENT SPECIFICATION

(11) **EP 1 054 840 B1**
(45) Date of publication and mention of the grant of the patent: **30.06.2004**
(21) Application number: 99971785.3
(22) Date of filing: 10.11.1999
(51) Int. Cl.: C02F 3/30

(54) **WASTEWATER TREATMENT PLANT COMPRISING UPFLOW ANAEROBIC REACTOR, AND WASTEWATER TREATMENT METHOD USING THEREOF**
VERFAHREN UND ANLAGE ZUR BEHANDLUNG VON ABWASSER MIT EINEM ANAEROBEN AUFSTROMREAKTOR
STATION DE TRAITEMENT DES EAUX USEES COMPRENANT UN REACTEUR ANAEROBIE A FLUX ASCENSIONNEL ET PROCEDE DE TRAITEMENT DES EAUX USEES APPLIQUE DANS CETTE STATION

(30) Priority: 11.11.1998 KR 9848263
(43) Date of publication of application: 29.11.2000
(73) Proprietor: Kwon, Joong-Chun, Seo-ku, Taejon-si 302-181 (KR)
(72) Inventor: KWON, Joong-Chun, Nae-dong, Seo-ku, Taejon-si 302-181 (KR); SHIN, Hang-Sik, Koong-dong, Yusong-ku, Taejon-si 305-335 (KR); BAE, Byung-Uk, Bub-dong, Taeduk-ku, Taejon-si 306-060 (KR); YOO, Kyu-Seon, Mannyun-dong, Seo-ku, Taejon-si 302-150 (KR)
(74) Representative: SERJEANTS
(86) International application number: PCT/KR1999/000676
(87) International publication number: WO 2000/027763

(56) References cited:
- EP-A1- 0 382 340
- WO-A1-87/05593
- DE-A1- 3 327 775
- US-A- 5 599 450

## Description

### Technical Field

The present invention relates to a wastewater treatment plant comprising an upflow anaerobic reactor and to a wastewater treatment method. More specifically, the present invention relates to a wastewater treatment plant which comprises facultative bacteria and an upflow anaerobic reactor, and also relates to a method for wastewater treatment using said plant. By using the present invention, organic wastewater containing non-biodegradable or toxic matter, nutrients (N, P), or heavy metals can be treated in a stable manner. Furthermore, by keeping a high concentration of sludge, treatment costs can be reduced. Additionally, land usage as well as the costs for construction and operation of the plant can be reduced by using a preinstalled settling tank as a reactor.

### Background Art

Generally, wastewater can contain nutrients such as nitrogen or phosphor, non-biodegradable or toxic matter, or heavy metals (and mixtures thereof). The treatment methods for clarifying such wastewater can generally be classified into biological methods for treatment of wastewater containing organic compounds, and physicochemical methods for treatment of wastewater having non-biodegradable or toxic matter or heavy metals therein.

For removal of organic compounds, a biological method is the most commonly used of the above treatment methods. An example of such a biological treatment is the activated sludge method which employs a treatment plant consisting of an initial settling tank, an aeration tank, and a terminal-settling tank. In this application, however, a thickening tank is indispensably required for the post-treatment process of the sludge since the sludge concentration in the settling tank is as low as 5000 ∼ 15000 mg/L. Furthermore, the efficiency of the terminal settling tank is greatly reduced under such low concentrations of sludge. Generally, the aeration tank is run with 1500 ~ 3000 mg/L sludge concentration during operation. Moreover, in the activated sludge method, there has often been a sludge-bulking phenomenon caused by the variation of the quality and amount of the influent water, which can often result in process failure or water quality deterioration.

Another biological method for releasing nitrogen or phosphor is one employing an anaerobic•aerobic method, in which an aerobic reactor provided with an oxygen supply and an anaerobic reactor without the supply of oxygen are arranged in a row for operation in the conventional activated sludge method (described above), and thereby, nitrogen and phosphor can be removed by means of the action of microorganisms. However, since this method employs a complete-mixing type of reactor, it is difficult to retain high concentrations of the microorganisms in the reactor and a complete anaerobic atmosphere is difficult to establish and maintain during the induction of denitration or phosphor effluence. Such considerations as these have often served as restrictions in designing a reactor and have brought about the problem of complicated operation.

In order to treat wastewater containing non-biodegradable or toxic matter or heavy metals, it is common to employ a biological method together with a physicochemical treatment method. However, such physicochemical methods suffer from a drawback in that operation cost is increased due to the large amount of chemicals used for adsorption or oxidation. Further, the biological treatment associated with these physicochemical methods, in terms of practical use, is in its early stage. A secondary treatment is indispensably required for elimination of the intermediate products of heavy toxicity which are produced during the initial treatment process and operation cost is inevitably increased because of the necessity of temperature retention in the anaerobic treatment stage.

To sum up, organic wastewater containing heavy metals has been clarified by using the physicochemical treatment method in the main, but in recent years, a biological treatment method using the sulfate-reducing bacteria has been developed. In this method, however, there is a defect that operation cost is increased due to temperature retention, since the sulfate-reducing bacteria, on account of its nature, must be grown in a rigorous anaerobic atmosphere.

In conclusion, a more efficient and economic method for treatment of wastewater is required in which such problems as inherent to the conventional physicochemical and biological methods for treatment of organic wastewater containing non-biodegradable or toxic matter, nutrients, such as nitrogen or phosphor, or heavy metals (and mixtures thereof) can all be remedied. Accordingly, it is an objective of the present invention to reduce the cost of treatment, improve the degree of clarification and to make redundant any secondary treatment which has previously been necessary to remove intermediate products.

The inventors of the present invention have unceasingly endeavored to solve the problems of the prior art by providing a wastewater treatment plant which comprises an upflow anaerobic reactor having the improved introducing means and discharging means, combined with the conventional aerobic reactor and settling tank. Thereby, organic wastewater containing non-biodegradable or toxic matter, nutrients such as nitrogen or phosphor, or heavy metals (or mixtures thereof) can be successfully treated, resulting in a substantial improvement of clarification efficiency.

### Summary of the Invention

A wastewater treatment plant having a first upflow anaerobic reactor, an anaerobic reactor having an aerating means and a terminal settling tank having a sludge-returning means in fluid communication with the first upflow anaerobic reactor, characterized in that the first upflow anaerobic reactor comprises an inlet mounted at a low external region thereof; an introducing means located at a low region therein, said introducing means being directly connected to the inlet and formed as a perforated drain pipe; mixing means provided at regular intervals along a main shaft of the first upflow anaerobic reactor, a discharging means positioned at an upper region therein said discharge means having weirs extending radially outwards from its center; a sludge-accumulating means provided at a low region thereof; and a sludge discharging means wherein the mixing means generates a reaction between influent wastewater and sludge returned from the terminal settling tank by the sludge-returning means, both of which are introduced into the first anaerobic reactor through the inlet to form a reaction water containing a portion of the sludge, the discharging means permits said reaction water to flow to the aerobic reactor and the sludge-accumulating means collects any sludge settling out under gravity during said reaction to be discharged by the sludge-discharging means.

The invention further provides a wastewater treatment method comprising the steps of: (i) introducing influent water into a first upflow anaerobic reactor through an introducing means directly connected to an inlet provided at a low external region of the first upflow anaerobic reactor and formed as a perforated drain pipe; (ii) introducing an activated sludge into the first upflow anaerobic reactor through the inlet and the introducing means and carrying out a fermentation reaction by continuously running mixing means at the rate of 3 ~ 20 rpm for preventing channeling of the sludge as it tends to flow upwards; (iii) discharging any sludge settled in the prior process through a sludge-accumulating means provided at the lowest center of the first upflow anaerobic reactor, while discharging reaction water containing a portion of the sludge into an aerobic reactor from the first upflow anaerobic reactor through a discharging means provided at an upper region in the first upflow anaerobic reactor, said discharge means having weirs extending radially outwards from its center; (iv) aerating the reaction water which is discharged into the aerobic reactor in the prior process with a sufficient amount of oxygen by using a diffuser; and (v) transferring the reaction water to the terminal settling tank after the above aeration process, obtaining the purified water separately, and returning any sludge settled under gravity to the inlet of the first upflow anaerobic reactor by using the actuation force of a sludge-returning pump after collecting said settled sludge in the sludge accumulating means provided at the lowest center in the terminal settling tank.

### Brief Description of Drawings

Fig. 1a is a schematic diagram illustrating one embodiment of a wastewater treatment plant employing an upflow anaerobic reactor according to the present invention.
Fig. 1b is a schematic diagram illustrating another embodiment of a wastewater treatment plant employing an upflow anaerobic reactor according to the present invention.
Fig. 1c is a schematic diagram illustrating a third embodiment of a wastewater treatment plant employing an upflow anaerobic reactor according to the present invention.
Fig. 2a is a schematic plane view of an introducing means in an anaerobic reactor according to the present invention.
Fig. 2b is a cross-sectional view of the introducing means shown in Fig. 2a along the line A-A.
Fig. 2c is a cross-sectional view of the introducing means shown in Fig. 2a along the line B-B.
Fig. 3a is a schematic plane view of a discharging means in an anaerobic reactor according to the present invention.
Fig. 3b is a cross-sectional view of the discharging means shown in Fig. 3a along the line A-A.
Fig. 3c is a cross-sectional view of the discharging means shown in Fig. 3a along the line B-B.
Fig. 4 is a graph showing the changes of COD (chemical oxygen demand) concentration in the influent water and of the sludge concentration (suspended solids and volatile suspended solids) in the anaerobic reactor.
Fig. 5 is a graph showing the changes of COD concentration in the influent water and of the sludge concentration (suspended solids and volatile suspended solids) in the aerobic reactor.
Fig. 6 is a graph showing the changes of COD concentrations in the influent water and in each of the reaction water discharged from the anaerobic reactor and the aerobic reactor, respectively.
Fig. 7 is a graph showing the changes of the COD removal efficiency in the anaerobic reactor and in the aerobic reactor, respectively.
Fig. 8 is a graph showing the changes of the concentrations of trichlorophenol in the influent water and in each of the effluent water discharged from the anaerobic reactor and the aerobic reactor, respectively.
Fig. 9 is a graph showing the concentrations of sulfate which is influent to and effluent from the anaerobic reactor, respectively.

### Preferred embodiments of the Invention

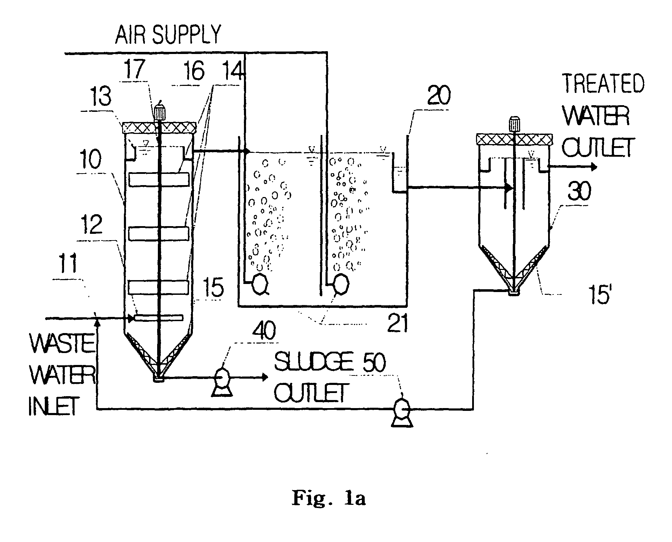

As one embodiment of the present invention, a wastewater treatment plant employing an upflow anaerobic reactor according to the present invention is described hereinbelow with reference to Fig. 1a.

First of all, the upflow anaerobic reactor (10) comprises an inlet (11), an introducing means (12), a discharging means (13), a mixing means (14), and a sludge-accumulating means (15).

Of these constituents, the inlet (11) is installed at the lowest external region of the anaerobic reactor (10) in order to introduce both the influent water and the sludge into the anaerobic reactor (10), said sludge having been returned from the terminal settling tank (30) by the actuation force of the sludge-returning pump (50). Such inlet (11) is integrated into a single channel before the introducing means (12) in order for the influent water to be mixed with the return sludge prior to flowing into the anaerobic reactor (10).

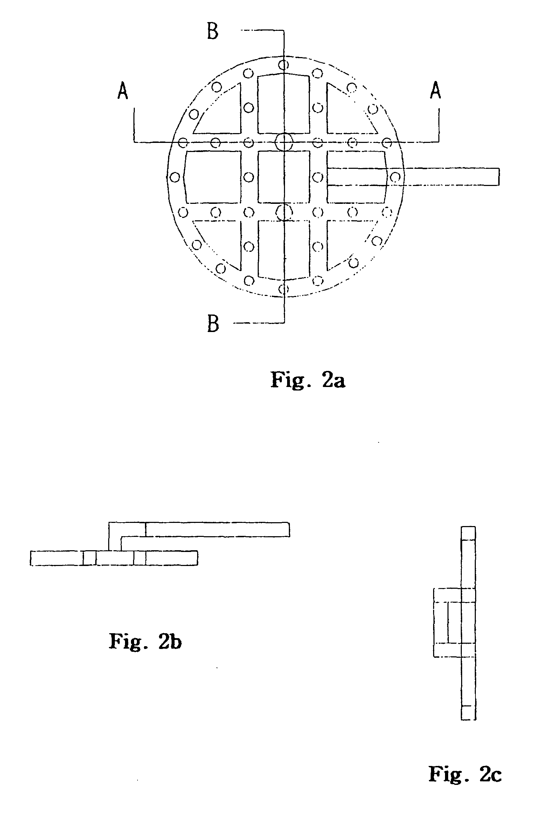

Next, the introducing means (12), directly connected to said inlet (11), is positioned at a low region in the anaerobic reactor (10) to allow the influent water and the return sludge passing through said inlet (11 ) to be introduced into a low region of the anaerobic reactor (10). The introducing means (12) is shaped as a perforated drain pipe (a pipe having perforations thereon) to prevent clogging by the sludge (ref.: Figs. 2a ∼ 2c), and is preferably made of a stainless steel.

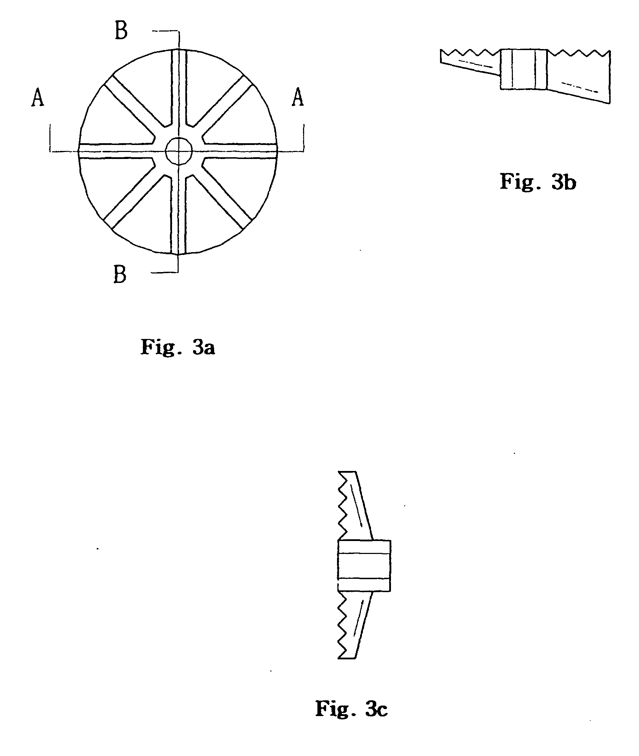

The discharging means (13) is positioned at an upper region in the anaerobic reactor (10) and is so designed that reaction water containing a portion of sufficiently grown sludge (to be described below) can flow into the aerobic reactor (20). Contrary to convention, the discharging means (13) of the present invention has a configuration wherein weirs are installed in a radial manner and extend outwardly from the center. This reduces clogging by the sludge and ensures uniform discharge of the effluent water (ref.: Figs. 3a ~3c). This discharging means (13) is designed in such a manner to evenly collect and discharge reaction water formed by the mixing of the return sludge with the influent water. It is made of an ordinary steel plate.

Next, three to six components of a mixing means (14) are installed on a main shaft (17) in the anaerobic reactor (10) at regular intervals of about 50cm ~ 1m, to prevent the sludge channeling and to mix the reaction water in a continuous manner, thereby actively promoting fermentation by the microorganisms in the anaerobic atmosphere. In this way, organic wastewater containing non-biodegradable or toxic matter or nutrients (N,P) is efficiently purified in the anaerobic reactor (10). The sludge which settles during the reaction generated by said mixing means (14) is collected at the lower center in the anaerobic reactor (10) through the sludge-accumulating means (15), and then discharged outside the reactor by the actuation force of the sludge-discharging pump (40).

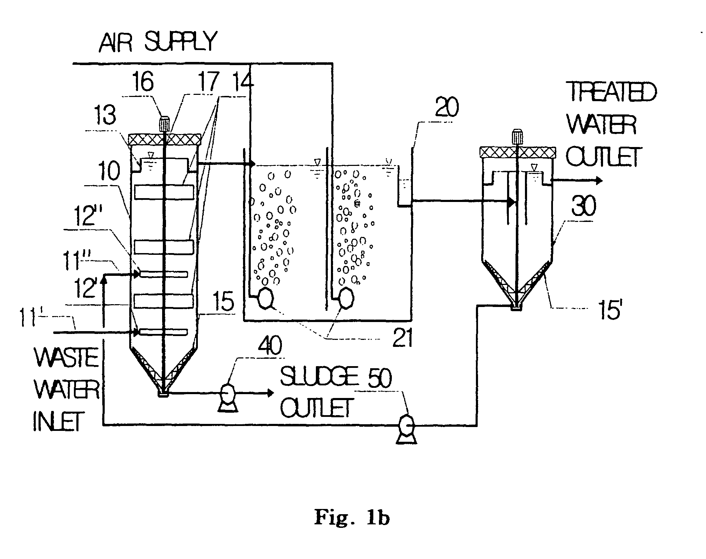

In a second embodiment of the present invention as shown in Fig. 1b, the inlet (11') for introduction of the influent water is separated from another inlet (11") for introduction of the return sludge. Correspondingly, the inflow water-introducing-means (12') is installed at the lowest region in the upflow anaerobic reactor (10), while the return sludge-introducing-means (12"), which is used for removing organic matter and nutrition salts contained in the influent water, is installed straight over the inflow water-introducing-means (12') in the upflow anaerobic reactor (10). Both of these means are constructed as perforated drain pipes which can prevent clogging by the sludge. Further, the upflow anaerobic reactor (10) of the second embodiment also comprises a discharging means (13), a mixing means (14), a sludge-accumulation means (15), etc., as illustrated in Fig. 1a.

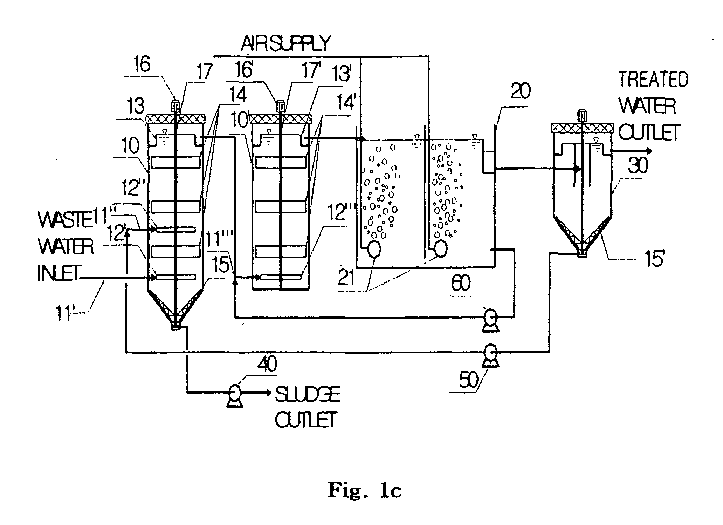

In the third embodiment according to the present invention, as shown in Fig. 1c, an additional upflow anaerobic reactor (10') is employed, which is installed sequentially to the wastewater treatment plant of the second embodiment of Fig. 1b. In order to mix return sludge which is returned from the aerobic reactor (20) via the internal return pump (60) with the reaction water containing a portion of sludge which is discharged from the first upflow anaerobic reactor (10), an inlet (11'") is provided at the lowest external region of the additional upflow anaerobic reactor (10'). Further, an introducing means (12"') is provided at a low region in the additional anaerobic reactor (10') and connected to said inlet (11"') by means of the flanges, thereby allowing both the effluent which is discharged from the first anaerobic reactor (10) and passed through the inlet (11"'), and the return sludge which is returned by the actuation force of the internal return pump (60) and passed through the inlet (11"'), to be introduced into the low region in the additional anaerobic reactor (10'). Such introducing means (12'") is constructed as a perforated drain pipe to prevent clogging by the sludge (ref.: Figs. 2a ∼ 2c). Further, the additional anaerobic reactor (10') also comprises a discharging means (13') and a mixing means (14'). Said discharging means (13') is situated at the upper region in the anaerobic reactor (10') for discharging reaction water containing a portion of sludge which has sufficiently matured by the mixing means (14') (this mixing means (14') to be described below) into the aerobic reactor (20). Further, said discharging means (13') has weirs extending radially outwards from the center, for the purpose of preventing clogging by the sludge and allowing the effluent water to be uniformly discharged. Three to six components of the mixing means (14') are installed on a main shaft (17') at a regular intervals of about 50cm ~ 1m in the anaerobic reactor (10'), to prevent the sludge channeling and to mix the reaction water continuously, thereby effecting the active fermentation caused by microorganisms in the anaerobic atmosphere. In this way, organic wastewater containing nutrients (N, P) is efficiently clarified in the additional anaerobic reactor (10').

The wastewater treatment plants in all embodiments as described above comprise an aerobic reactor (20) and a terminal settling tank (30) in addition to said upflow anaerobic reactor (10). The aerobic reactor (20) used herein has an oxygen-generating means, namely, a diffuser (21) at its lower region, for attempting to supply a sufficient amount of oxygen for the facultative fermenting bacteria in order for them to exhibit a high activity. In this regard, any aerobic reactor (20) of such material and construction as commonly used in the art may be suitable for use in the present invention. The terminal settling tank (30) is used for removing the sludge which has been effectively degraded by the facultative bacteria present in the reaction water in said aerobic reactor (20). For this, a gravity settling tank is preferred in which the sludge is slowly removed by gravity in clarifying the wastewater to obtain purified water. In addition, however, such a settling tank as equipped with a scum baffle can also be used for the present invention. The sludge precipitated in the settling tank is collected by the sludge accumulating means (15), then returned to the inlet (11) at the lowest external region of the anaerobic reactor (10) by the sludge-returning pump (50), and finally separated and discharged by the sludge-discharging pump (40) in said anaerobic reactor (10). Further, an actuating means (16, 16') is mounted at the upper end of the main shaft (17, 17') in the anaerobic reactor (10, 10'), to provide the actuation force for running the mixing means (14, 14') connected to the main shaft in the anaerobic reactor.

As described hereinbefore, the wastewater treatment plant according to the present invention has the advantage that organic wastewater containing non-biodegradable or toxic matter or nutrients (N, P) can be treated more efficiently than in the conventional wastewater treatment plants, by virtue of using facultative bacteria and an upflow anaerobic reactor.

Below, the wastewater treatment method which employs the wastewater treatment plant comprising the upflow anaerobic reactor according to the present invention is described in more detail by stages as well as the function and effect of said wastewater treatment plant.

### Step 1: introduction of influent water into the anaerobic reactor

The influent water which is organic wastewater containing non-biodegradable or toxic matter, nutrients (N, P) or the like is firstly guided into the anaerobic reactor (10) through the inlet (11, 11') provided at the lowest external region of the anaerobic reactor (10), and then, said influent water is introduced into the anaerobic reactor (10) through the introducing means (12, 12') which is connected to the inlet (11, 11') inside the anaerobic reactor (10).

### Step 2: fermentation in the anaerobic reactor

Activated sludge is introduced into the anaerobic reactor (10) through said inlet (11,11") and introducing means (12, 12") for the purpose of clarifying influent water which contains non-biodegradable or toxic matter or nutrients (N, P) and is introduced into the anaerobic reactor (10) as described in Step 1, in an even more efficient fashion. Next, the mixing means (14) mounted on the main shaft (17) in the reactor is run continuously at the rate of 3 ∼ 20 rpm for generation of full fermentation. Here, in order to more efficiently clarify organic wastewater containing non-biodegradable or toxic matter, nutrients such as nitrogen or phosphor, or heavy metals, a secondary fermentation process may further be included. To elaborate, the reaction water is firstly fermented selectively in said anaerobic reactor (10), and is then aerated in the aeration tank (20). Meanwhile, return sludge containing some part of such sludge as discharged from the aerobic reactor (20) after the above aeration process and recycled through the internal return pump (60) is introduced into the other anaerobic reactor (10') through the inlet (11'") and the introducing means (12'"). Then, secondary fermentation is carried out by continuously running the mixing means (14') at a rate of 3 ~ 20 rpm for preventing the channeling of the sludge which is apt to flow upwards. Such rate of mixing can prevent the channeling phenomenon of the influent admixture, which is caused due to the high concentration of the sludge when the admixture of the sludge and organic wastewater uprises in the anaerobic reactor (10, 10') during said reaction process. If the mixing rate of said mixing means (14, 14') is less than 3 rpm, the reaction is rendered not sufficient due to the occurrence of the channeling phenomenon. It is also undesirable that the mixing rate is more than 20 rpm, for complete mixing occurs in such a case, with the result that a plug-flow type reactor cannot be used.

### Step 3: influence into the aerobic reactor

A portion of the sludge which settles during the above process is collected by the sludge-accumulating means (15) positioned at the lower center in the anaerobic reactor (10), and then discharged by the actuation force of the sludge-discharging pump (40). Reaction water containing a portion of the sludge flows upwards and is discharged from the anaerobic reactor (10, 10') and introduced into the aerobic reactor (20) via the discharging means (13, 13') situated at the upper region in the anaerobic reactor (10, 10').

### Step 4: aeration in the aerobic reactor

The reaction water containing a portion of the sludge, which was discharged from the anaerobic reactor (10, 10') in the prior process, is provided with a sufficient amount of oxygen through a diffuser (21). As such, the activities of the aerobic bacteria or the facultative bacteria present in the sludge are increased so that the various organic matters in the wastewater are decomposed through oxidation to inorganic matters such as H₂O, CO₂, etc., ammonia nitrogen and organic nitrogen are degraded into the nitrate nitrogen, and the sludge ingests excess phosphor.

### Step 5: separation of purified water and return of sludge

The reaction water partially purified by the above aeration process is transferred into the terminal settling tank (30) for obtaining purified water separately. Sludge settled by gravity is collected by the sludge-accumulating means (15') situated at the lower center in the terminal settling tank (30). Afterwards, the collected sludge is returned to the inlet (11, 11 ") positioned at the lowest external region of the anaerobic reactor (10) by the actuation force of the sludge-returning pump (50), and finally discharged to the outside from the anaerobic reactor (10) by the actuation force of the sludge-discharging pump (40) by way of a weight-reducing means such as sludge digester or dewatering means.

In the above wastewater treatment method according to the present invention, suitable microorganisms for use in the anaerobic reactor (10, 10') or the aerobic reactor (20) may include Nitrosomonas, Nitrobacter, Denitrifier, Sulfate-reducing bacteria, Pseudomonas, Achromobacter, Aerhorbacter, Micrococcus, Bacillus, Proteus, Flovobacterium, Acinetobacter, Corynebacterium, Mycobacterium, or the like. In addition to these microorganisms, a variety of facultative bacteria, which are commercially available, can be used in the present invention depending on the target organic matter.

The present invention will be described in further detail on the basis of the following examples. Since these examples merely illustrate the advantageous effects of the present invention, it will become apparent to those of ordinary knowledge in the art that the scope of the present invention is not limited to these examples.

### Example 1: clarification of organic matter of high concentration

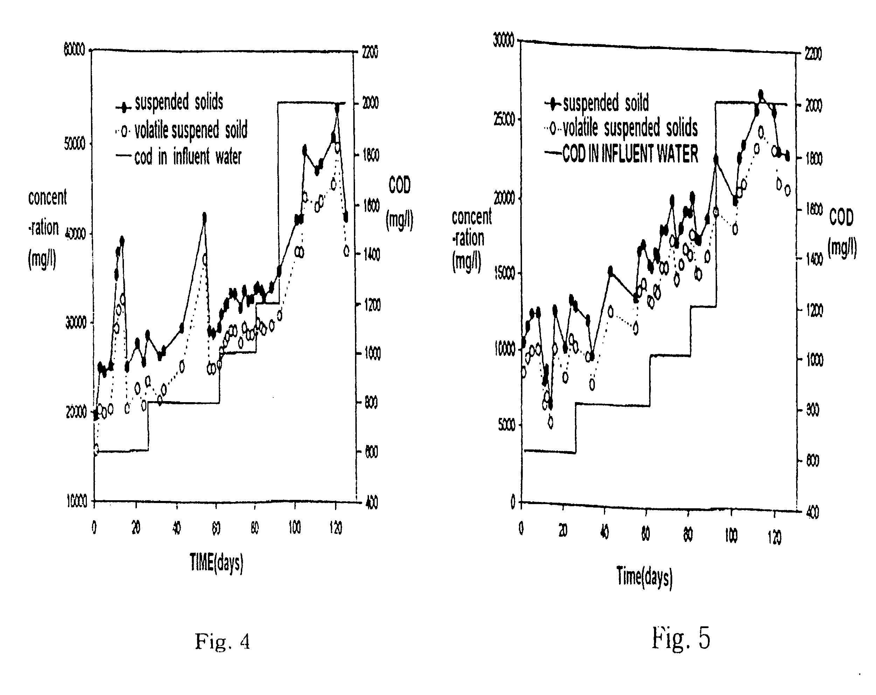

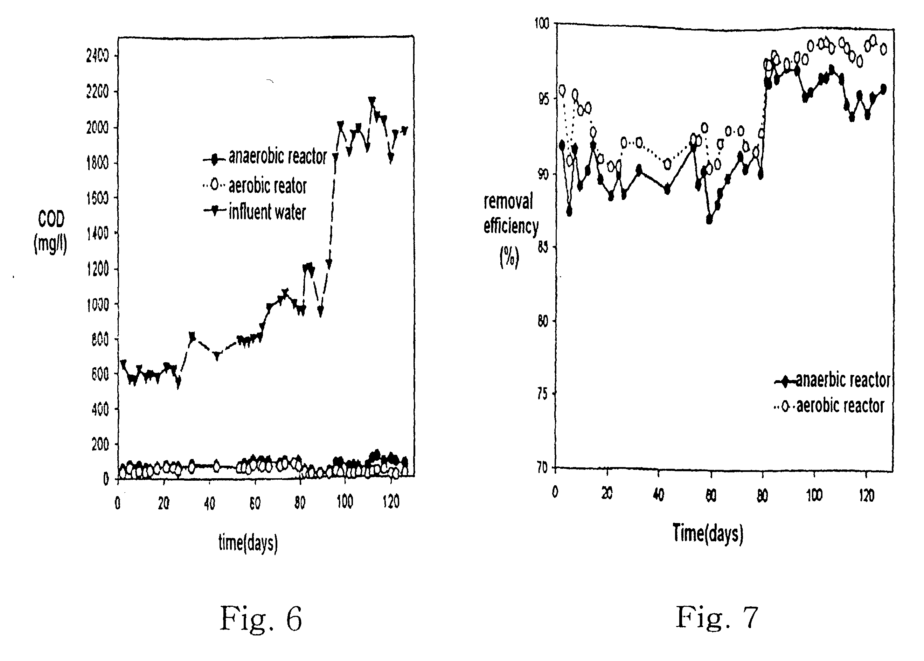

The retention time for organic matter of high concentration was governed to be 15 hours in the reactors (anaerobic reactor 7 hours, aerobic reactor: 8 hours), and the concentration of the organic matter was changed from 600 mg/L to 2000 mg/L. With these conditions, the clarification process was carried out by using a wastewater treatment plant comprising an upflow anaerobic reactor according to the present invention. As a result, the concentration of the sludge (suspended solids and volatile suspended solids) in the anaerobic reactor was maintained within the range of from 25000 mg/L to 55000 mg/L, which concentration made it possible for the anaerobic reactor to serve as a thickening tank (ref.: Fig. 4). The concentration of the sludge (suspended solids and volatile suspended solids) in the aerobic reactor had changed within the range of 10000 mg/L ~ 25000 mg/L as the COD (chemical oxygen demand) concentration of the influent water was changed from 600 mg/L to 2000 mg/L. That is, the concentration of the sludge in the present invention was kept more than 6 ~ 8 times as high as that in the typical activated sludge method, viz., 1500 mg/L ~ 3000 mg/L (ref.: Fig. 5). To this end, the bulk size of the reactor could be reduced since a greater amount of the sludge could be retained over the process when compared with the typical activated sludge process. Further, if the concentration of the organic matter is increased, the sludge bulking befalls in the typical activated sludge process, to which process failure is attributed, whereas, in the present invention, even in the case where the COD concentration of the influent water was increased to 2000 mg/L, the COD concentration in the anaerobic reactor was kept below 100 mg/L and the removal efficiency was 85 ∼ 90% in the anaerobic reactor, and further, the COD concentration of the effluent water from the aerobic reactor was also kept below 100 mg/L to exhibit more than a 98% removal efficiency in the aerobic reactor (ref.: Figs. 6 and 7). Consequently, with this empirical confirmation that wastewater containing organic matter of high concentration could stably be treated, it has been found that the present invention could also be applied to treatment of organic wastewater of high concentration.

### Example 2: clarification of wastewater containing trichlorophenol

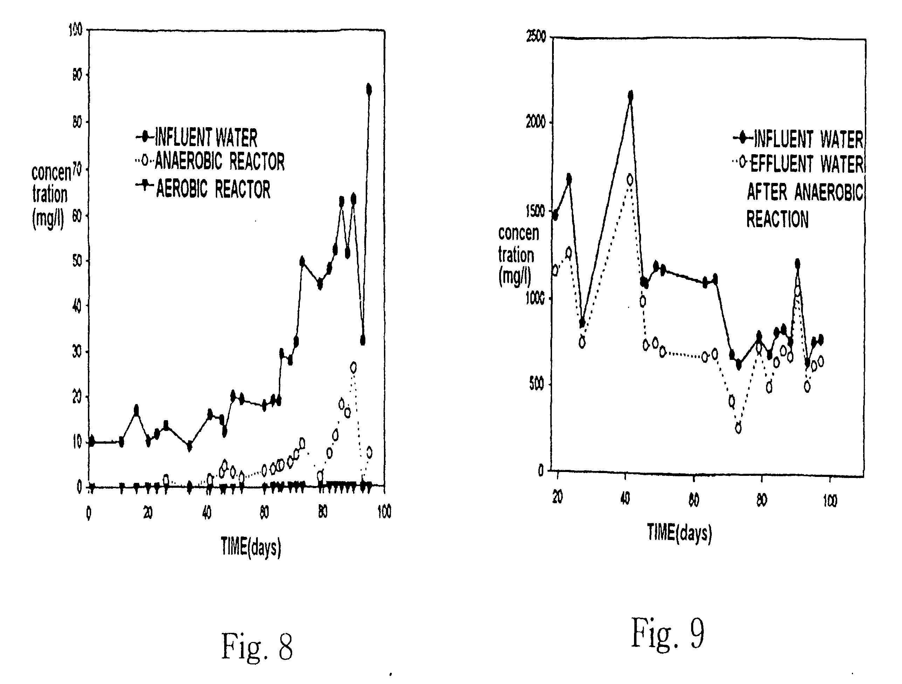

The commonly known chlorinated compound, viz., trichlorophenol (hereinafter referred to as 'TCP') was used in the present Example as a toxic and non-biodegradable matter. Generally, the chlorinated compound is known difficult to degrade using a biological treatment due to its inherent toxicity and non-degradability. While increasing the concentration of TCP from 10 mg/L to 60 mg/L, the wastewater was clarified by an anaerobic•aerobic method employing an upflow anaerobic reactor inoculated with facultative bacteria according to the present invention. The result thereof, as can be seen in Fig. 8, was not only that intermediate products, which were typical of the general anaerobic treatment, were not generated during the process, but also that no intermediate products were produced in the effluent water from the aerobic reactor.

### Example 3: clarification of wastewater containing sulfate

600 ∼ 2400 mg/L of sulfate was fed into the wastewater treatment plant comprising an upflow anaerobic reactor inoculated with facultative bacteria according to the present invention. Then, the clarification process was carried out over the period of about 100 days, during which time 20 measurements were taken of the concentration of the influent liquor and that of the effluent liquor from the anaerobic reactor. As a consequence, as illustrated in Fig. 9, the sulfate removal efficiency in the anaerobic reactor was found to be 30 ∼ 60 %. This proves that it is feasible to remove heavy metals in the state of sulfate after combination with sulfides.

As particularly described and proved in the above, the present invention provides a wastewater treatment plant comprising an upflow anaerobic reactor and a wastewater treatment method using said plant. With the use of a wastewater treatment plant of the present invention, an organic wastewater containing non-biodegradable or toxic matter, nutrients such as nitrogen or phosphor, or heavy metals (or mixtures thereof) can be biologically treated. Further, the bulk size of the reactor can be reduced by keeping a high concentration of the sludge in the reactor, which results in the economical treatment of wastewater. In particular, the present invention does not require a thickening tank if used as a sewage treatment plant thanks to the high concentration of the sludge in the upflow anaerobic reactor, and further, the initial settling tank can also serve as a reactor, thereby achieving the additional benefits of reduced land usage and reduced costs for construction and operation.

## Claims

1. A wastewater treatment plant having a first upflow anaerobic reactor (10), an aerobic reactor (20) having an aerating means (21) and a terminal settling tank (30) having a sludge-returning means (50) in fluid communication with the first upflow anaerobic reactor (10), **characterized in that** the first upflow anaerobic reactor (10) comprises:
an inlet (11) mounted at a low external region thereof;
an introducing means (12) located at a low region therein, said introducing means (12) being directly connected to the inlet (11) and formed as a perforated drain pipe;
mixing means (14) provided at regular intervals along a main shaft (17) of the first upflow anaerobic reactor (10);
a discharging means (13) positioned at an upper region therein, said discharge means (13) having weirs extending radially outwards from its center;
a sludge-accumulating means (15) provided at a low region thereof; and
a sludge-discharging means (40);
wherein the mixing means (14) generates a reaction between influent wastewater and sludge returned from the terminal settling tank (30) by the sludge-returning means (50), both of which are introduced into the first anaerobic reactor (10) through the inlet (11), to form a reaction water containing a portion of the sludge, the discharging means (13) permits said reaction water to flow to the aerobic reactor (20), and the sludge-accumulating means (15) collects any sludge settling out under gravity during said reaction to be discharged by the sludge-discharging means (40).

2. A wastewater treatment plant according to claim 1, wherein the inlet (11) is separated into an influent water-guiding-inlet (11') and a return sludge-guiding-inlet (11") and the introducing means 12 is separated into an influent water-introducing-means (12') and a return sludge-introducing-means (12").

3. A wastewater treatment plant according to claim 1 or claim 2 further comprising a second upflow anaerobic reactor (10') having:
an inlet (11"') mounted at a low external region thereof for permitting both the reaction water discharged from the first upflow anaerobic reactor (10) and sludge returned from the aerobic reactor (20) by an internal return pump (60) after an aeration process therein, to mix together and then flow into a low region in the second upflow anaerobic reactor (10');
an introducing means (12"') located at a low region therein, said introducing means (12"') being directly connected to the inlet (11"') and formed as a perforated drain pipe;
mixing means (14') provided at regular intervals along a main shaft (17') of the second upflow anaerobic reactor (10'); and
a discharging means (13') positioned at an upper region therein, said discharge means (13') having weirs extending radially outwards from its center for discharging reaction water containing a portion of sludge to the aerobic reactor (20).

4. A wastewater treatment method comprises the steps of:
(i) introducing influent water into a first upflow anaerobic reactor (10) through an introducing means (12,12') directly connected to an inlet (11,11') provided at a low external region of the first upflow anaerobic reactor (10) and formed as a perforated drain pipe;
(ii) introducing an activated sludge into the first upflow anaerobic reactor (10) through the inlet (11, 11") and the introducing means (12, 12") and carrying out a fermentation reaction by continuously running mixing means (14) at the rate of 3 ~ 20 rpm for preventing channeling of the sludge as it tends to flow upwards;
(iii) discharging any sludge settled in the prior process through a sludge-accumulating means (15) provided at the lowest center of the first upflow anaerobic reactor (10), while discharging reaction water containing a portion of the sludge into an aerobic reactor (20) from the first upflow anaerobic reactor (10) through a discharging means (13) provided at an upper region in the first upflow anaerobic reactor (10), said discharge means (13) having weirs extending radially outwards from its center;
(iv) aerating the reaction water which is discharged into the aerobic reactor (20) in the prior process with a sufficient amount of oxygen by using a diffuser (21); and
(v) transferring the reaction water to the terminal settling tank (30) after the above aeration process, obtaining the purified water separately, and returning any sludge settled under gravity to the inlet (11, 11") of the first upflow anaerobic reactor (10) by using the actuation force of a sludge-returning pump (50) after collecting said settled sludge in the sludge accumulating means (15') provided at the lowest center in the terminal settling tank (30).

5. A wastewater treatment method according to claim 4 further comprising the steps of:
(i) introducing both the reaction water discharged from the first upflow anaerobic reactor (10) and a sludge returned from the aerobic reactor (20) after aeration into an additional upflow anaerobic reactor (10') through a secondary inlet (11"') and a secondary introducing means (12"') formed as a perforated drain pipe;
(ii) carrying out a secondary fermentation reaction by continuously running secondary mixing means (14') at the rate of 3 ∼ 20 rpm for preventing channeling of the sludge as it tends to flow upwards; and
(iii) discharging the resultant admixture into the aerobic reactor (20) by using a secondary discharging means (13') provided in the additional upflow anaerobic reactor (10').

## Patentansprüche

1. Anlage zur Behandlung von Abwasser, mit einem ersten anaeroben Aufstromreaktor (10), einem aeroben Reaktor (20), welcher ein Belüftungsmittel (21) auf weist, sowie einem End-Klärtank (30), welcher ein Schlammrückführmittel (50) in Fluidverbindung mit dem ersten anaeroben Aufstromreaktor (10) aufweist, **dadurch gekennzeichnet, dass** der erste anaerobe Aufstromreaktor (10) umfasst:
einen in einem unteren Außenbereich desselben angeordneten Einlass (11);
ein in einem unteren Bereich darin befindliches Einleitungsmittel (12), wobei das Einleitungsmittel (12) direkt mit dem Einlass (11) verbunden ist und als durchlöchertes Ablaufrohr ausgebildet ist;
in regelmäßigen Abständen längs einer Hauptwelle (17) des ersten anaeroben Aufstromreaktors (10) vorgesehene Mischmittel (14);
ein in einem oberen Bereich darin angeordnetes Abflussmittel (13), wobei das Abflussmittel (13) Wehre aufweist, welche sich von seiner Mitte nach radial außen erstrecken;
ein in einem unteren Bereich desselben vorgesehenes Schlammsammelmittel (15); und
ein Schlammabführmittel (40);
wobei die Mischmittel (14) eine Reaktion erzeugen zwischen einfließendem Abwasser und durch das Schlammrückleitungsmittel (50) von dem End-Klärtank (30) rückgeführtem Schlamm, die beide über den Einlass (11) in den ersten anaeroben Reaktor (10) eingeleitet werden, um ein einen Teil des Schlamms enthaltendes Reaktionswasser zu bilden, wobei es das Abflussmittel (13) dem Reaktionswasser gestattet, zu dem aeroben Reaktor (20) zu fließen, und das Schlammsammelmittel (15) Schlamm sammelt, der sich während der Reaktion unter Schwerkraft absetzt und von dem Schlammabführmittel (40) abzuführen ist.

2. Abwasserbehandlungsanlage nach Anspruch 1, wobei der Einlass (11) in einen einfließendes Wasser führenden Einlass (11') sowie einen rückgeleiteten Schlamm führenden Einlass (11") getrennt ist und das Einleitungsmittel 12 in ein einfließendes Wasser einleitendes Mittel (12') sowie ein rückgeleiteten Schlamm einleitendes Mittel (12") getrennt ist.

3. Abwasserbehandlungsanlage nach Anspruch 1 oder Anspruch 2, ferner umfassend einen zweiten anaeroben Aufstromreaktror (10') mit:
einem in einem unteren Außenbereich desselben angebrachten Einlass (11"'), um sowohl dem von dem ersten anaeroben Aufstromreaktor (10) abgeführten Reaktionswasser als auch von dem aeroben Reaktor (20) mittels einer internen Rückleitungspumpe (60) nach einem darin stattgefundenen Belüftungsvorgang rückgeleitetem Schlamm eine Vermischung und sodann ein Einströmen in einen unteren Bereich in dem zweiten anaeroben Aufstromreaktor (10') zu ermöglichen;
einem in einem unteren Bereich darin befindlichen Einleitungsmittel (12'"), wobei das Einleitungsmittel (12"') direkt mit dem Einlass (11'") verbunden ist und als durchlöchertes Ablaufrohr ausgebildet ist;
in regelmäßigen Intervallen längs einer Hauptwelle (17') des zweiten anaeroben Aufstromreaktors (10') vorgesehenen Mischmitteln (14'); und
einem in einem oberen Bereich darin angeordneten Abflussmittel, wobei das Abflussmittel (13') Wehre aufweist, welche sich von seiner Mitte radial nach außen erstrecken, um Reaktionswasser, das einen Teil des Schlamms enthält, zu dem aeroben Reaktor (10) abzuführen.

4. Abwasserbehandlungsverfahren, umfassend die Schritte:
(i) Einleiten von einfließendem Wasser in einen ersten anaeroben Aufstromreaktor (10) über ein Einleitungsmittel (12, 12'), welches direkt mit einem in einem unteren Außenbereich des ersten anaeroben Aufstromreaktors (10) vorgesehenen Einlass (11, 11') verbunden ist und als durchlöchertes Ablaufrohr ausgebildet ist;
(ii) Einleiten eines aktivierten Schlamms in den ersten anaeroben Aufstromreaktor (10) durch den Einlass (11, 11") und das Einleitungsmittel (12, 12") und Ausführen einer Fermentierungsreaktion durch fortwährendes Laufenlassen von Mischmitteln (14) mit einer Rate von 3 ~ 20 U/min zur Vermeidung von Kanalbildung des Schlamms bei dessen Neigung zum Aufsteigen nach oben;
(iii) Abführen von Schlamm, der sich im vorherigen Prozess mittels eines in der untersten Mitte des ersten anaeroben Aufstromreaktors (10) vorgesehenen Schlammsammelmittels (15) abgesetzt hat, und dabei Abführen von Reaktionswasser, das einen Teil des Schlamms enthält, in einen aeroben Reaktor (20) aus dem ersten anaeroben Aufstromreaktor (10) mittels eines in einem oberen Bereich des ersten anaeroben Aufstromreaktors (10) vorgesehenen Abflussmittels (13), wobei das Abflussmittel Wehre aufweist, welche sich von seiner Mitte nach radial außen erstrecken;
(iv) Belüften des im vorherigen Prozess in den aeroben Reaktor (20) abgeführten Reaktionswassers mit einer hinreichenden Menge Sauerstoff mit Hilfe eines Diffusors (21); und
(v) Überführen des Reaktionswassers zu dem End-Klärtank (30) nach dem obigen Belüftungsprozess, gesondertes Gewinnen des gereinigten Wassers und Rückleiten von Schlamm, der sich unter Schwerkraft abgesetzt hat, zum Einlass (11, 11") des ersten anaeroben Aufstromreaktors (10) mit Hilfe der Antriebskraft einer Schlammrückleitungspumpe (50) nach Sammeln des abgesetzten Schlamms in dem in der untersten Mitte in dem End-Klärtank (30) vorgesehenen Schlammsammelmittel (15').

5. Abwasserbehandlungsverfahren nach Anspruch 4, ferner umfassend die Schritte:
(i) Einleiten sowohl des von dem ersten anaeroben Aufstromreaktor (10) abgeführten Reaktionswassers als auch von dem aeroben Reaktor (20) nach Belüftung rückgeleitetem Schlamm in einen zusätzlichen anaeroben Aufstromreaktor (10') über einen sekundären Einlass (11'") sowie ein als durchlöchertes Ablaufrohr ausgebildetes sekundäres Einleitungsmittel (12'");
(ii) Ausführen einer sekundären Fermentierungsreaktion durch fortwährendes Laufenlassen sekundärer Mischmittel (14') mit einer Rate von 3 ~ 20 U/min zur Verhinderung von Kanalbildung des Schlamms bei dessen Neigung zum Aufströmen nach oben; und
(iii) Abführen der resultierenden Mischung in den aeroben Reaktor (20) mit Hilfe eines in dem zusätzlichen anaeroben Aufstromreaktor (10') vorgesehenen sekundären Abflussmittels (13').

## Revendications

1. Station de traitement des eaux usées ayant un premier réacteur anaérobie à flux ascensionnel (10), un réacteur aérobie (20) ayant un moyen d'aération (21) et un bac de décantation terminal (30) ayant un moyen de retour des boues (50) en communication fluide avec le premier réacteur anaérobie à flux ascensionnel (10), **caractérisée en ce que** le premier réacteur anaérobie à flux ascensionnel (10) comporte :
un orifice d'entrée (11) monté au niveau d'une région externe basse de celui-ci ;
un moyen d'introduction (12) situé au niveau d'une région basse dans celui-ci, ledit moyen d'introduction (12) étant directement connecté sur l'orifice d'entrée (11) et formé comme un tuyau d'écoulement perforé ;
des moyens de mélange (14) prévus à intervalles réguliers le long d'un arbre principal (17) du premier réacteur anaérobie à flux ascensionnel (10) ;
un moyen de décharge (13) positionné au niveau d'une région plus haute dans celui-ci, ledit moyen de décharge (13) ayant des déversoirs se prolongeant de manière radiale vers l'extérieur en provenance de son centre ;
un moyen d'accumulation des boues (15) prévu au niveau d'une région basse de celui-ci ; et
un moyen de décharge des boues (40) ;
dans laquelle le moyen de mélange (14) suscite une réaction entre les eaux usées influentes et les boues retournées en provenance du bac de décantation terminal (30) par le biais du moyen de retour des boues (50), toutes deux étant introduites dans le premier réacteur anaérobie (10) par le biais de l'orifice d'entrée (11), pour former une eau de réaction contenant une portion des boues, dans laquelle le moyen de décharge (13) permet à ladite eau de réaction de s'écouler vers le réacteur aérobie (20), et dans laquelle le moyen d'accumulation des boues (15) collecte les boues se décantant sous l'effet de la gravité au cours de ladite réaction et devant être déchargées par le moyen de décharge des boues (40).

2. Station de traitement des eaux usées selon la revendication 1, dans laquelle l'orifice d'entrée (11) est divisé en un orifice d'entrée de guidage des eaux influentes (11') et en un orifice d'entrée de guidage des boues de retour (11") et dans laquelle le moyen d'introduction (12) est divisé en un moyen d'introduction des eaux influentes (12') et un moyen d'introduction des boues de retour (12").

3. Station de traitement des eaux usées selon la revendication 1 ou la revendication 2, comportant par ailleurs un deuxième réacteur anaérobie à flux ascensionnel (10') ayant :
un orifice d'entrée (11'") monté au niveau d'une région externe basse de celui-ci afin de permettre à la fois à l'eau de réaction déchargée en provenance du premier réacteur anaérobie à flux ascensionnel (10) et aux boues retournées en provenance du réacteur aérobie (20) par le bais d'une pompe de retour interne (60) après un processus d'aération dans celui-ci, de se mélanger ensemble puis de s'écouler dans une région basse du deuxième réacteur anaérobie à flux ascensionnel (10') ;
un moyen d'introduction (12"') situé au niveau d'une région basse dans celui-ci, ledit moyen d'introduction (12"') étant directement connecté sur l'orifice d'entrée (11'") et formé comme un tuyau d'écoulement perforé ;
des moyens de mélange (14') prévus à intervalles réguliers le long d'un arbre principal (17') du deuxième réacteur anaérobie à flux ascensionnel (10') ; et
un moyen de décharge (13') positionné au niveau d'une région plus haute dans celui-ci, ledit moyen de décharge (13') ayant des déversoirs se prolongeant de manière radiale vers l'extérieur en provenance de son centre pour décharger l'eau de réaction contenant une portion des boues dans le réacteur aérobie (20).

4. Procédé de traitement des eaux usées comportant les étapes suivantes :
(i) l'introduction des eaux influentes dans un premier réacteur anaérobie à flux ascensionnel (10) par le biais d'un moyen d'introduction (12, 12') directement connecté à un orifice d'entrée (11, 11') prévu au niveau d'une région externe basse du premier réacteur anaérobie à flux ascensionnel (10) et formé comme un tuyau d'écoulement perforé ;
(ii) l'introduction de boues activées dans le premier réacteur anaérobie à flux ascensionnel (10) par le biais de l'orifice d'entrée (11, 11') et du moyen d'introduction (12, 12') et la réalisation d'une réaction de fermentation sous l'action continue des moyens de mélange (14) à une vitesse de 3 à 20 tr/min afin d'empêcher toute canalisation des boues car celles-ci ont tendance à s'écouler vers le haut ;
(iii) la décharge des boues décantées lors du processus précédent par le biais d'un moyen d'accumulation des boues (15) prévu au centre le plus bas du premier réacteur anaérobie à flux ascensionnel (10), en même temps que la décharge de l'eau de réaction contenant une portion des boues dans un réacteur aérobie (20) en provenance du premier réacteur anaérobie à flux ascensionnel (10) par le biais d'un moyen de décharge (13) prévu au niveau d'une région plus haute dans le premier réacteur anaérobie à flux ascensionnel (10), ledit moyen de décharge (13) ayant des déversoirs se prolongeant de manière radiale vers l'extérieur en provenance de son centre ;
(iv) l'aération de l'eau de réaction qui est déchargée dans le réacteur aérobie (20) au cours du processus précédent avec une quantité suffisante d'oxygène par le biais d'un diffuseur (21) ; et
(v) le transfert de l'eau de réaction vers le bac de décantation terminal (30) après le processus d'aération ci-dessus, l'obtention de l'eau purifiée séparément, et le retour des boues décantées sous l'effet de la gravité dans l'orifice d'entrée (11, 11') du premier réacteur anaérobie à flux ascensionnel (10) par le biais de la force d'activation d'une pompe de retour des boues (50) après la collecte desdites boues décantées dans le moyen d'accumulation des boues (15') prévu au centre le plus bas dans le bac de décantation terminal (30).

5. Procédé de traitement des eaux usées selon la revendication 4, comportant par ailleurs les étapes suivantes :
(i) l'introduction à la fois de l'eau de réaction déchargée en provenance du premier réacteur anaérobie à flux ascensionnel (10) et des boues retournées en provenance du réacteur aérobie (20) après l'opération d'aération dans un réacteur anaérobie à flux ascensionnel supplémentaire (10') par le biais d'un orifice d'entrée secondaire (11''') et d'un moyen d'introduction secondaire (12"') formé comme un tuyau d'écoulement perforé ;
(ii) la réalisation d'une réaction de fermentation secondaire sous l'action continue des moyens de mélange secondaires (14') à une vitesse de 3 à 20 tr/min afin d'empêcher toute canalisation des boues car celles-ci ont tendance à s'écouler vers le haut ; et
(iii) la décharge de la mixture en résultant dans le réacteur aérobie (20) par le biais d'un moyen de décharge secondaire (13') prévu dans le réacteur anaérobie à flux ascensionnel supplémentaire (10').
